# EUROPEAN PATENT APPLICATION

(11) **EP 4 524 711 A1**
(43) Date of publication of application: **19.03.2025**
(21) Application number: 23818797.5
(22) Date of filing: 25.03.2023
(51) Int. Cl.: G06F 3/06

(54) **DATA ACCESS METHOD AND APPARATUS, AND STORAGE SYSTEM AND STORAGE MEDIUM**

(30) Priority: 07.06.2022 CN 202210639666
(71) Applicant: Huawei Technologies Co., Ltd., Shenzhen, Guangdong 518129 (CN)
(72) Inventor: TAN, Chunhua, Shenzhen, Guangdong 518129 (CN); WANG, Wei, Shenzhen, Guangdong 518129 (CN); CAO, Yu, Shenzhen, Guangdong 518129 (CN)
(74) Representative: Grünecker Patent- und Rechtsanwälte PartG mbB
(86) International application number: PCT/CN2023/083907
(87) International publication number: WO 2023/236629

(57) **Abstract**

Embodiments of this application disclose a data access method and apparatus, a storage system, and a storage medium, and relate to the field of data storage technologies. In embodiments of this application, a storage node in the storage system stores a data page, and may further receive a permission request of a compute node for the stored data page and allocate an access permission to the compute node. In other words, in embodiments of this application, a permission management function of the data page is offloaded from the compute node to the storage node that stores the data page. In this way, even if a compute node is faulty, a primary compute node does not need to be reselected, and another compute node may still apply for an access permission via the storage node in the storage system. This improves system availability.

## Description

### TECHNICAL FIELD

This application relates to the field of data storage technologies, and in particular, to a data access method and apparatus, a storage system, and a storage medium.

### BACKGROUND

A storage-compute decoupled storage system includes a plurality of compute nodes and a plurality of storage nodes that are separately deployed. Usually, when a database is deployed in the storage system, compute components such as an analyzer, an optimizer, and an executor may be deployed in the plurality of compute nodes to implement a database operation function, and storage components may be deployed in the plurality of storage nodes to implement a database storage function. The plurality of compute nodes may access the plurality of storage nodes in a sharing manner.

In the conventional technology, a plurality of storage nodes store data in a form of a data page. Each data page corresponds to one primary compute node. The primary compute node is configured to manage an access permission for a corresponding data page. For any data page, when a compute node other than a primary compute node of the data page wants to modify the data page, the compute node first sends a permission request to the primary compute node of the data page. After receiving the permission request, the primary compute node allocates an access permission to the compute node. After the allocation succeeds, the compute node may obtain the data page from a storage node that stores the data page or a compute node that modifies the data page most recently, and further modify the data page.

In the foregoing storage system, when any compute node in the plurality of compute nodes is faulty, the storage system needs to re-determine a primary compute node for a target data page that uses the faulty node as a primary compute node. Before the primary compute node is re-determined, the storage system cannot provide external services.

### SUMMARY

Embodiments of this application provide a path fault detection method, an apparatus, a system, a network device, and a storage medium, to shorten a fault detection periodicity, and improve fault detection accuracy. The technical solutions are as follows.

According to a first aspect, a data access method is provided, applied to a storage node in a storage system, and the method includes: in response to a permission request sent by a first compute node, allocating a first access permission for a target data page to the first compute node, where the target data page is one of a plurality of data pages stored in the storage node, and the first compute node is one of a plurality of compute nodes included in the storage system; and sending permission feedback information and the target data page to the first compute node, where the permission feedback information indicates to allow the first compute node to access the target data page based on the first access permission.

In this embodiment of this application, the storage node in the storage system stores the data page, and may receive the permission request of the compute node for the stored data page, and allocate the access permission to the compute node. In other words, in this embodiment of this application, a permission management function of the data page is offloaded from the compute node to the storage node that stores the data page. In this way, even if a compute node is faulty, a primary compute node does not need to be reselected, and another compute node may still apply for an access permission via the storage node in the storage system. This improves system availability.

Optionally, the storage node communicates with each compute node in the storage system by using a network. In other words, the storage node and the compute node are separated.

Optionally, an implementation process of the allocating a first access permission for a target data page to the first compute node may include: when a second compute node that has an access permission for the target data page currently does not exist, allocating the first access permission to the first compute node based on the permission request.

If the second compute node that has the access permission for the target data page currently does not exist, it indicates that the target data page currently does not exist in a memory of any compute node. In this case, the storage node may directly allocate the access permission to the first compute node.

Optionally, the permission request includes a page identifier of the target data page. An implementation process in which the storage node determines whether the second compute node currently exists may include: searching for access permission information of the target data page based on the page identifier of the target data page, where the access permission information of the target data page indicates a compute node that currently has the access permission for the target data page; and when the access permission information of the target data page is not found, determining that the second compute node currently does not exist.

Optionally, in addition to the page identifier of the target data page, the permission request may further include a node identifier of the first compute node and a permission identifier of the first access permission. Correspondingly, an implementation process in which the storage node allocates the first access permission to the first compute node based on the permission request may include: storing the page identifier of the target data page, the node identifier of the first compute node, and the permission identifier of the first access permission in a correspondence manner, to obtain the access permission information of the target data page. In this way, the first compute node becomes a node that currently has the access permission for the target data page. In other words, the first compute node is a current owner of the target data page.

Optionally, after allocating the first access permission to the first compute node based on the permission request, the storage node may further read the target data page from the plurality of data pages persistently stored in the storage node.

Before the first compute node applies for the access permission for the target data page, the target data page does not exist in the memory of the another compute node. Therefore, the storage node may directly read the target data page persistently stored in the storage node, to subsequently return the target data page and the permission feedback information to the first compute node at one time. It can be learned that, in this embodiment of this application, because the storage node has both functions of storing the target data page and managing permission information of the target data page, when the target data page is initially loaded into the memory of the compute node, the compute node can obtain both the access permission and the target data page through one time of interaction between the compute node and the storage node. This reduces network bandwidth consumption, and improves access efficiency.

Alternatively, an implementation process in which the storage node allocates the first access permission for the target data page to the first compute node includes: when a second compute node that has an access permission for the target data page currently exists, allocating the first access permission to the first compute node based on a second access permission of the second compute node for the target data page and the permission request.

If the second compute node that has the access permission for the target data page currently exists, it indicates that the second compute node is a current owner of the target data page. In this case, the storage node may allocate the access permission to the first compute node based on the second access permission of the second compute node for the target data page and the permission request.

Optionally, the permission request includes a page identifier of the target data page. An implementation process in which the storage node determines whether the second compute node currently exists may include: searching for access permission information of the target data page based on the page identifier of the target data page, where the access permission information of the target data page indicates a compute node that currently has the access permission for the target data page; and when the access permission information of the target data page is found, determining that the second compute node currently exists.

Optionally, an implementation process in which the storage node allocates the first access permission to the first compute node based on the second access permission of the second compute node for the target data page and the permission request may include: updating the access permission information of the target data page based on the second access permission of the second compute node for the target data page and the permission request, to obtain updated access permission information. The updated access permission information indicates that the first compute node has the first access permission for the target data page.

Optionally, in addition to the page identifier of the target data page, the permission request may further include a node identifier of the first compute node and a permission identifier of the first access permission. The access permission information of the target data page includes a correspondence between the page identifier of the target data page, a node identifier of the second compute node, and a permission identifier of the second access permission. On this basis, an implementation process in which the storage node updates the access permission information of the target data page based on the second access permission of the second compute node for the target data page and the permission request, to obtain the updated access permission information may include the following several cases.

In a first case, when the first access permission is a write operation permission, and the permission identifier of the first access permission is the same as the permission identifier of the second access permission, the node identifier of the second compute node is updated to the node identifier of the first compute node, to obtain the updated access permission information.

In other words, in this embodiment of this application, if the second compute node currently has a write operation permission for the target data page, and the first compute node also requests the write operation permission for the target data page, the storage node cancels the write operation permission of the second compute node for the target data page, and allocates the write operation permission for the target data page to the first compute node, to ensure that only one compute node has the write operation permission for the target data page at a same moment. Therefore, a write conflict is avoided.

In a second case, when the first access permission is a write operation permission, and the permission identifier of the first access permission is different from the permission identifier of the second access permission, the node identifier of the second compute node is updated to the node identifier of the first compute node, and the permission identifier of the second access permission is updated to the permission identifier of the first access permission, to obtain the updated access permission information.

In other words, in this embodiment of this application, if the second compute node currently has a read operation permission for the target data page, and the first compute node requests a write operation permission for the target data page, the storage node cancels the read operation permission of the second compute node for the target data page, and allocates the write operation permission for the target data page to the first compute node. In this way, in a process in which the first compute node modifies the target data page, another compute node cannot read the target data page. Therefore, a read/write conflict is avoided.

In a third case, when the first access permission is a read operation permission, and the permission identifier of the first access permission is the same as the permission identifier of the second access permission, a correspondence between the page identifier of the target data page, the node identifier of the first compute node, and the permission identifier of the first access permission is added to the access permission information of the target data page, to obtain the updated access permission information.

In other words, in this embodiment of this application, when the second access permission is a read operation permission, and the first access permission that the first compute node applies for is also the read operation permission, the storage node may allocate a read operation permission for the target data page to the first compute node without changing the read operation permission of the second compute node for the target data page, so that compute nodes read the target data page in a sharing manner.

In a fourth case, if the first access permission is a read operation permission, and the permission identifier of the first access permission is different from the permission identifier of the second access permission, the storage node updates the permission identifier of the second access permission to the permission identifier of the first access permission, and adds a correspondence between the page identifier of the target data page, the node identifier of the first compute node, and the permission identifier of the first access permission to the access permission information of the target data page, to obtain the updated access permission information.

In other words, in this embodiment of this application, if the second compute node currently has a write operation permission for the target data page, and the first compute node requests a read operation permission for the target data page, the storage node allocates the read operation permission for the target data page to the first compute node, and changes the write operation permission of the second compute node for the target data page to the read operation permission. In this case, the first compute node and the second compute node read the target data page in a sharing manner.

Optionally, in a process of allocating the access permission to the first compute node in any manner of the foregoing four cases, the storage node may further read the target data page from the second compute node.

It can be learned that, in this embodiment of this application, after receiving the permission request of the first compute node, the storage node may read the target data page from the second compute node that currently has the access permission for the target data page. Further, the storage node feeds back the read data page and the access permission to be allocated to the first compute node to the first compute node at one time. The storage node does not need to feed back node information of the second compute node to the first compute node. The first compute node interacts with the second compute node to obtain the data page, so that interaction between nodes is reduced, the network bandwidth consumption is reduced, and the access efficiency is improved.

Optionally, if the first access permission that the first compute node applies for is the write operation permission, the first compute node modifies the target data page after receiving the permission feedback information and the target data page.

According to a second aspect, a data access apparatus is provided, used in a storage node in a storage system. The apparatus includes at least one module, and the at least one module is configured to implement the data access method according to the first aspect. For example, the at least one module includes a permission management module and a sending module.

The permission management module is configured to: in response to a permission request sent by a first compute node, allocate a first access permission for a target data page to the first compute node, where the target data page is one of a plurality of data pages stored in the storage node, and the first compute node is one of a plurality of compute nodes included in the storage system. The sending module is configured to send permission feedback information and the target data page to the first compute node. The permission feedback information indicates to allow the first compute node to access the target data page based on the first access permission.

Optionally, the storage node communicates with the plurality of compute nodes by using a network.

Optionally, the permission management module is mainly configured to: when a second compute node that has an access permission for the target data page currently does not exist, allocate the first access permission to the first compute node based on the permission request.

Optionally, the permission request includes a page identifier of the target data page. The permission management module is further configured to: search for access permission information of the target data page based on the page identifier of the target data page, where the access permission information of the target data page indicates a compute node that currently has the access permission for the target data page; and when the access permission information of the target data page is not found, determine that the second compute node currently does not exist.

Optionally, the permission request further includes a node identifier of the first compute node and a permission identifier of the first access permission. The permission management module is mainly configured to: store the page identifier of the target data page, the node identifier of the first compute node, and the permission identifier of the first access permission in a correspondence manner, to obtain the access permission information of the target data page.

Optionally, the apparatus further includes a reading module, configured to read the target data page from the plurality of data pages persistently stored in the storage node.

Alternatively, the permission management module is mainly configured to: when a second compute node that has an access permission for the target data page currently exists, allocate the first access permission to the first compute node based on a second access permission of the second compute node for the target data page and the permission request.

Optionally, the permission request includes a page identifier of the target data page. The permission management module is further configured to: search for the access permission information of the target data page based on the page identifier of the target data page, where the access permission information of the target data page indicates a compute node that currently has the access permission for the target data page; and when the access permission information of the target data page is found, determine that the second compute node currently exists.

Optionally, the permission management module is mainly configured to: update the access permission information of the target data page based on the second access permission of the second compute node for the target data page and the permission request, to obtain updated access permission information, where the updated access permission information indicates that the first compute node has the first access permission for the target data page.

Optionally, the permission request further includes a node identifier of the first compute node and a permission identifier of the first access permission, and the access permission information of the target data page includes a correspondence between the page identifier of the target data page, a node identifier of the second compute node, and a permission identifier of the second access permission. The permission management module is mainly configured to: when the first access permission is a write operation permission, and the permission identifier of the first access permission is the same as the permission identifier of the second access permission, update the node identifier of the second compute node to the node identifier of the first compute node, to obtain the updated access permission information.

Alternatively, the permission request further includes a node identifier of the first compute node and a permission identifier of the first access permission, and the access permission information of the target data page includes a correspondence between the page identifier of the target data page, a node identifier of the second compute node, and a permission identifier of the second access permission. The permission management module is mainly configured to: when the first access permission is a write operation permission, and the permission identifier of the first access permission is different from the permission identifier of the second access permission, update the node identifier of the second compute node to the node identifier of the first compute node, and update the permission identifier of the second access permission to the permission identifier of the first access permission, to obtain the updated access permission information.

Alternatively, the permission request further includes a node identifier of the first compute node and a permission identifier of the first access permission, and the access permission information of the target data page includes a correspondence between the page identifier of the target data page, a node identifier of the second compute node, and a permission identifier of the second access permission. The permission management module is mainly configured to: when the first access permission is a read operation permission, and the permission identifier of the first access permission is the same as the permission identifier of the second access permission, add a correspondence between the page identifier of target data page, the node identifier of the first compute node, and the permission identifier of the first access permission to the access permission information of the target data page, to obtain the updated access permission information.

Optionally, the apparatus further includes a reading module, configured to read the target data page from the second compute node.

According to a third aspect, a storage node is provided. A structure of the storage node includes a processor, a memory, and a hard disk. The memory is configured to store at least one program instruction or code that supports a network device in performing the data access method according to the first aspect, and store data used to implement the data access method according to the first aspect. The processor is configured to execute the program instruction and code stored in the memory. The hard disk is configured to store data persistently.

According to a fourth aspect, a storage system is provided. The storage system includes a plurality of compute nodes and a plurality of storage nodes. When any compute node in the plurality of compute nodes is configured to send a permission request to any storage node, and the permission request is used to request a first access permission for a target data page, the any storage node is configured to perform the data access method according to the first aspect, and the any compute node is further configured to receive permission feedback information and the target data page sent by the any storage node. The permission feedback information indicates to allow the any compute node to access the target data page based on the first access permission.

According to a fifth aspect, a computer-readable storage medium is provided. The computer-readable storage medium stores instructions. When the instructions are run on a computer, the computer is enabled to perform the data access method according to the first aspect.

According to a sixth aspect, a computer program product including instructions is provided. When the computer program product runs on a computer, the computer is enabled to perform the data access method according to the first aspect.

Technical effects achieved in the second aspect, the third aspect, the fourth aspect, the fifth aspect, and the sixth aspect are similar to technical effects achieved by using corresponding technical means in the first aspect. Details are not described herein again.

The technical solutions provided in embodiments of this application have at least the following beneficial effects.

In embodiments of this application, the storage node in the storage system stores the data page, and may receive the permission request of the compute node for the stored data page, and allocate the access permission to the compute node. In other words, in embodiments of this application, the permission management function of the data page is offloaded from the compute node to the storage node that stores the data page. In this way, even if a compute node is faulty, a primary compute node does not need to be reselected. The another compute node may still apply for the access permission via the storage node in the storage system. This improves the system availability.

### BRIEF DESCRIPTION OF DRAWINGS

FIG. 1 is a diagram of a system architecture of a storage system according to an embodiment of this application;
FIG. 2 is a flowchart in which a compute node accesses a data page via a primary compute node in the conventional technology;
FIG. 3 is another flowchart in which a compute node accesses a data page via a primary compute node in the conventional technology;
FIG. 4 is a diagram in which a compute node accesses a data page via a primary compute node in the conventional technology;
FIG. 5 is a flowchart of a data access method according to an embodiment of this application;
FIG. 6 is a diagram in which a compute node accesses a data page via a storage node according to an embodiment of this application;
FIG. 7 is a flowchart in which a compute node accesses a data page via a storage node according to an embodiment of this application;
FIG. 8 is another flowchart in which a compute node accesses a data page via a storage node according to an embodiment of this application; and
FIG. 9 is a diagram of a structure of a data access apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described in detail, an implementation environment of embodiments of this application is first described.

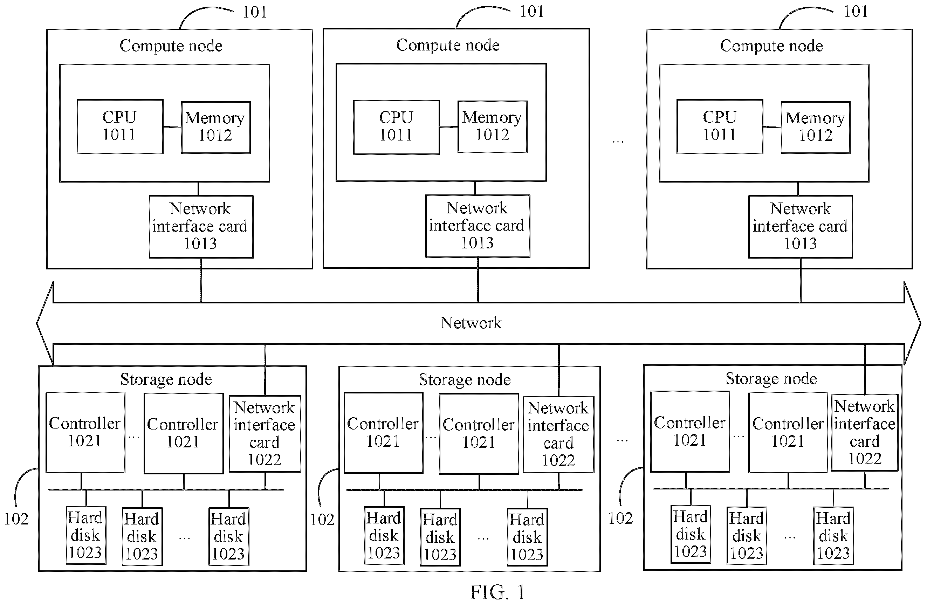

FIG. 1 is a diagram of an architecture of a storage-compute decoupled storage system. A data access method provided in embodiments of this application may be applied to the storage system. Decoupled storage and compute means that a compute function and a storage function are separated and deployed on different devices. A device mainly configured to implement the compute function is referred to as a compute node, and a device mainly providing a data storage function is referred to as a storage node. As shown in FIG. 1, the storage system may include a plurality of compute nodes 101 and a plurality of storage nodes 102. The compute nodes 101 may communicate with each other by using a network, and each compute node 101 may access any storage node 102 by using a network.

The compute node 101 is a compute device, such as a server, a desktop computer, or the like. In terms of hardware, as shown in FIG. 1, the compute node 101 includes at least a processor 1011, a memory 1012, and a network interface card 1013. The processor 1011 is a central processing unit (CPU), and is configured to process a data access request from the outside of the compute node 101 or a request generated inside the compute node 101. For example, when receiving a data write request sent by a user, the processor 1011 temporarily stores data in the data write request in the memory 1012. When a total amount of data in the memory 1012 reaches a specific threshold, the processor 1011 sends the data stored in the memory 1012 to the storage node 102 for persistent storage. In addition, the processor 1011 is further configured to perform data calculation or processing, such as metadata management, deduplication, data compression, virtualized storage space, address translation, and the like. FIG. 1 shows only one CPU 1011. During actual application, there are usually a plurality of CPUs 1011, and one CPU 1011 has one or more CPU cores. A quantity of CPUs and a quantity of CPU cores are not limited in embodiments. In terms of software, a compute program may be deployed in the compute node 101. The compute program may be referred to as a compute component. For example, a database analyzer, a database optimizer, a database executor, and the like in a database architecture may be deployed in the compute node 101. In embodiments of this application, the compute program deployed in the compute node 101 may further include a page client, configured to process a read/write operation of a data page in a database. It should be noted that the compute program may be stored in the memory 1012 in the compute node 101, and is executed by the processor 1011 to implement a corresponding function.

The memory 1012 is a memory that directly exchanges data with the processor 1011. The data can be read/written in the memory 1012 at a high speed at any time, and the memory 1012 serves as a temporary data memory of an operating system or another running program. The memory includes at least two types of memories. For example, the memory may be a random access memory or a read-only memory (ROM). For example, the random access memory is a dynamic random access memory (DRAM), or a storage class memory (SCM). The DRAM is a semiconductor memory, and is a volatile memory (volatile memory) device like most random access memories (RAMs). The SCM uses a composite storage technology that combines both a conventional storage apparatus feature and a memory feature. The storage class memory can provide a higher read/write speed than a hard disk, but is slower than the DRAM in terms of an access speed and cheaper than the DRAM in terms of costs. However, the DRAM and the SCM are merely examples for description in embodiments. The memory may further include another random access memory, for example, a static random access memory (SRAM) and the like. For example, the read-only memory may be a programmable read-only memory (PROM), an erasable programmable read-only memory (EPROM), or the like. In addition, the memory 1012 may be a dual in-line memory module or a dual-line memory module (DIMM), that is, a module formed by the DRAM, or may be a solid-state drive (SSD). During actual application, a plurality of memories 1012 and different types of memories 1012 may be configured in the compute node 101. A quantity of memories 1012 and a type of the memory 1012 are not limited in embodiments. In addition, the memory 1012 may be configured to have a power-off protection function. The power-off protection function means that the data stored in the memory 1012 is not lost even when a system is powered off and then powered on again. A memory with a power-off protection function is referred to as a non-volatile memory.

The network interface card 1013 is configured to communicate with the storage node 102. When the total amount of the data in the memory 1012 reaches the specific threshold, the compute node 101 may send a request to the storage node 102 via the network interface card 1013, to persistently store the data. In addition, the compute node 101 may further include a bus, and the bus is used for communication between components inside the compute node 101. In terms of functions, a main function of the compute node 101 in FIG. 1 is a compute service, and the compute node 101 may use a remote memory to implement the persistent storage during data storage. Therefore, the compute node 101 has fewer local memories than a conventional server. Therefore, costs and space are saved. However, this does not mean that the compute node 101 cannot have a local memory. During actual implementation, the compute node 101 may also have a small quantity of built-in hard disks, or may be externally connected to a small quantity of hard disks.

Any compute node 101 may access any storage node 102 by using a network. The storage system in embodiments of this application includes the plurality of storage nodes 102 (where three storage nodes 102 are shown in FIG. 1, but the storage nodes are not limited to the three storage nodes 102). One storage node 102 includes one or more controllers 1021, a network interface card 1022, and a plurality of hard disks 1023. The network interface card 1022 is configured to communicate with the compute node 101. The hard disk 1023 is configured to store data, and may be a magnetic disk or another type of storage medium, for example, a solid-state drive, a shingled magnetic recording hard disk, or the like. The controller 1021 is configured to write data into the hard disk 1023 or read data from the hard disk 1023 based on a data read/write request sent by the compute node 101. In a data read/write process, the controller 1021 needs to convert an address carried in the data read/write request into an address that can be identified by the hard disk. It can be learned that the controller 1021 also has some simple compute functions.

During actual application, the controller 1021 may have a plurality of forms. In a case, the controller 1021 includes a CPU and a memory. The CPU is configured to perform operations such as address translation, data reading/writing, and the like. The memory is configured to temporarily store data that is to be written into the hard disk 1023, or data that is read from the hard disk 1023 and that is to be sent to the compute node 101. In another case, the CPU may be replaced with a data processing unit (data processing unit, DPU). The DPU has versatility and programmability of the CPU, but is more specialized, and can run efficiently on a network data packet, a storage request, or an analysis request. The DPU is distinguished from the CPU by a high degree of parallelism (which needs to process a large quantity of requests). Optionally, the DPU herein may alternatively be replaced with a processing chip such as a graphics processing unit (graphics processing unit, GPU), an embedded neural-network processing unit (neural-network processing unit, NPU), or the like. Usually, there may be one, two, or more controllers 1021. When the storage node 102 includes at least two controllers 1021, there may be a homing relationship between the hard disk 1023 and the controller 1021. When there is the homing relationship between the hard disk 1023 and the controller 1021, each controller can access only a hard disk that belongs to the controller. Therefore, this usually relates to forwarding the data read/write request between the controllers 1021, causing a long data access path. In addition, if storage space is insufficient, when a new hard disk 1023 is added to the storage node 102, the homing relationship between the hard disk 1023 and the controller 1021 needs to be rebound, and an operation is complex. Consequently, scalability of the storage space is poor.

Therefore, in another implementation, a function of the controller 1021 may be offloaded to the network interface card 1022. In other words, in the implementation shown in FIG. 1, the storage node 102 does not have the controller 1021, and the network interface card 1022 completes the data reading/writing, the address translation, and other compute functions. In this case, the network interface card 1022 is an intelligent network interface card. The network interface card 1022 may include a CPU and a memory. The CPU is configured to perform operations, such as the address translation, the data reading/writing, and the like. The memory 103 is configured to temporarily store the data that is to be written into the hard disk 1023, or the data that is read from the hard disk 1023 and that is to be sent to the compute node 101. When there is no homing relationship between the network interface card 1022 and the hard disk 1023 in the storage node 102. The network interface card 1022 may access any one of the hard disks 1023 in the storage node 102. Therefore, it is convenient to expand the hard disk when the storage space is insufficient.

In addition, in embodiments of this application, in terms of software, a storage program in the database architecture may be deployed in the storage node 102. For example, the storage program may be a page service end. The page service end is configured to provide functions such as access to the data page in the database, access permission management, and the like. It should be noted that the storage program may be stored in the memory in the controller 1021, and the CPU in the controller 1021 may execute the storage program to implement the functions of the page service end. Alternatively, the storage program may be stored in the memory in the network interface card 1022, and the CPU in the network interface card 1022 may execute the storage program to implement the functions of the page service end.

The foregoing descriptions are an example of a system architecture of a storage system to which the data access method in embodiments of this application is applied. In addition, the data access method may also be applied to another type of storage-compute decoupled storage system. In this case, a compute node and a storage node in the storage system may have more or fewer hardware or software structures than the foregoing compute node and storage node. This is not limited in embodiments of this application.

A database may be deployed in the storage-compute decoupled storage system. It can be learned from the foregoing descriptions that compute programs such as the database analyzer, the database optimizer, the database executor, and the like in the database architecture may be deployed in the compute node, and a database storage program may be deployed in the storage node. In a storage system in which a database is deployed, data may be persistently stored in a storage node in a form of a data page. Currently, to improve data access efficiency, a compute node in the storage system may implement global shared access to the data page by using a cache fusion technology. The cache fusion technology actually means that a memory of each compute node is used as a shared cache. In this way, after a compute node reads a data page from a storage node into the memory, each compute node may implement shared access to the data page via the shared cache. In a process of performing the shared access to the data page, access permission management of the data page is also implemented by a compute node side.

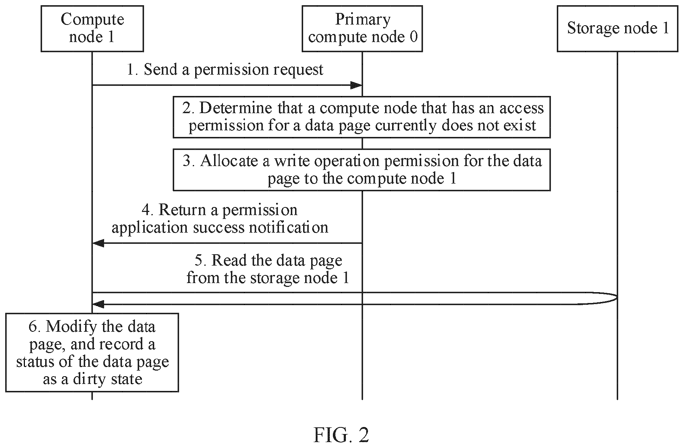

For example, currently, for each data page that is persistently stored in each storage node, a primary compute node of the data page may be determined from a plurality of compute nodes by using a consistent hashing algorithm. The primary compute node is a node that manages an access permission for the data page. The following uses any data page as an example to describe a process in which each compute node performs a write operation on the data page by using the cache fusion technology. As shown in FIG. 2, it is assumed that a primary compute node of the data page is a compute node 0, and the data page currently does not exist in a memory of any compute node. In this case, when a compute node 1 wants to perform the write operation on the data page, an implementation process is as follows.
1. The compute node 1 sends a permission request to the primary compute node 0.
2. After receiving the permission request, the primary compute node 0 determines that a compute node that has an access permission for the data page currently does not exist. In other words, the data page is not in the memory of any compute node.
3. The primary compute node 0 allocates a write operation permission for the data page to the compute node 1.
   In this case, the compute node 1 is an owner (owner) of the data page, in other words, a node that has the access permission for the data page.
4. The primary compute node 0 returns a permission application success notification to the compute node 1.
5. After receiving the permission application success notification, the compute node 1 reads the data page from a storage node 1 that persistently stores the data page.
6. The compute node 1 modifies the data page, and records a status of the data page as a dirty (dirty) state.

After modifying the data page, the compute node 1 stores a modified data page in a memory. In addition, recording the status of the data page as the dirty state may represent that the data page has been modified by the compute node 1, and the modified data page has not been persistently stored in the storage node 1.

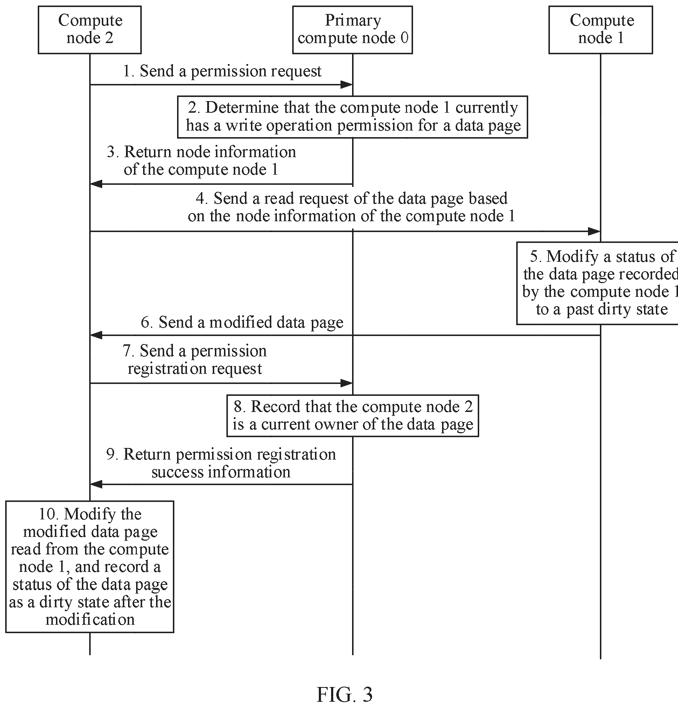

After the compute node 1 modifies the data page, it is assumed that a compute node 2 also wants to modify the data page, and in this case, the modification may be implemented by using a procedure shown in FIG. 3.
1. A compute node 2 sends a permission request to a primary compute node 0.
2. After receiving the permission request, the primary compute node 0 determines, based on access permission information of a data page recorded by the primary compute node 0, that a compute node 1 currently has a write operation permission for the data page.
   In other words, the compute node 1 is a current owner of the data page.
3. The primary compute node 0 returns node information of the compute node 1 to the compute node 2.
4. The compute node 2 sends a read request of the data page to the compute node 1 based on the node information of the compute node 1.
5. After receiving the read request, the compute node 1 modifies a status of the data page recorded by the compute node 1 to a past dirty (past dirty) state.
   The past dirty state represents that the compute node 1 has modified the data page, but the data page is subsequently modified by another node. The compute node 1 may not necessarily persistently store a modified data page.
6. The compute node 1 sends the modified data page to the compute node 2.
7. After receiving the modified data page, the compute node 2 sends a permission registration request to the primary compute node 0.
8. After receiving the permission registration request, the primary compute node 0 records that the compute node 2 is the current owner of the data page.
   In other words, the primary compute node 0 registers that the compute node 2 currently has an access permission for the data page.
9. The primary compute node 0 returns permission registration success information to the compute node 2.
10. After receiving the permission registration success information, the compute node 2 modifies the modified data page read from the compute node 1, and records a status of the data page as a dirty state after the modification.

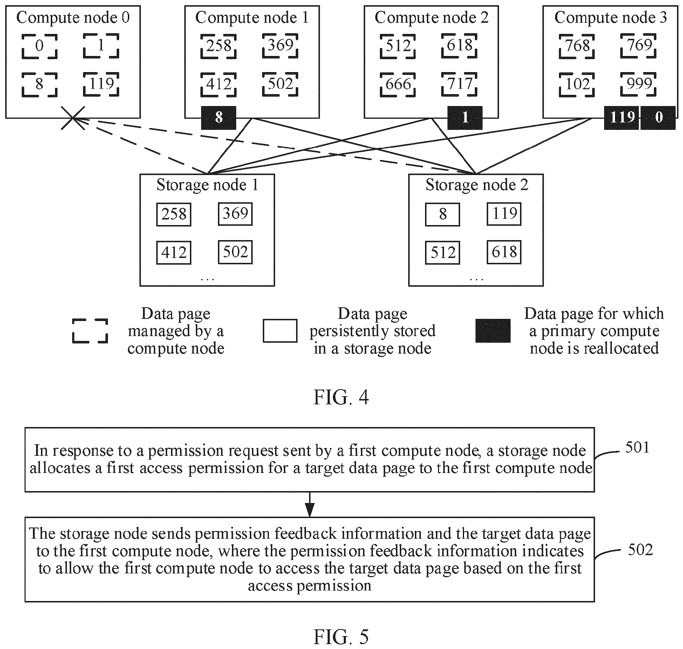

It can be learned from the foregoing descriptions that, in a current process of implementing shared access to the data page by using the cache fusion technology, access permission management of the data page needs to be implemented via the primary compute node of the data page. In this case, once the primary compute node of the data page is faulty, all corresponding data pages cannot be accessed. For example, as shown in FIG. 4, when a compute node 0 is faulty, all of a data page 0, a data page 1, a data page 8, and a data page 119 managed by the compute node 0 cannot be accessed. In this case, a primary compute node needs to be re-determined, by using a consistent hashing algorithm, separately for the data page 0, the data page 1, the data page 8, and the data page 119 that are managed by the faulty node. Further, access permission information of the data pages managed by the compute node 0 and a data page in a memory are migrated to the reselected primary compute node. During this process, an entire database cannot provide services. This affects database availability. In addition, because the primary compute node needs to be re-determined by using the consistent hashing algorithm and a large amount of data need to be migrated. Consequently, consumed time is long, in other words, fault recovery time is long.

In addition, it can be learned from the foregoing data page access procedure that when a compute node wants to access a data page, applying for an access permission for the data page and reading the data page need to be implemented by using a plurality of requests. Consequently, network bandwidth is consumed and efficiency is low.

In view of this, embodiments of this application provide a data access method. A permission management function of the data page is offloaded from a compute node to a storage node that stores the data page. In this way, even if a compute node is faulty, a primary compute node does not need to be reselected. This improves system availability. In addition, because the permission management function of the data page is implemented by the storage node that stores the data page, an access permission and the data page may be obtained from the storage node at one time. This reduces a quantity of times of interaction between nodes, reduces network bandwidth consumption, and improves access efficiency.

The following describes the data access method provided in embodiments of this application.

FIG. 5 is a flowchart of a data access method according to an embodiment of this application. The method may be applied to any storage node in the storage-compute decoupled storage system described above. As shown in FIG. 5, the method includes the following steps.

Step 501: In response to a permission request sent by a first compute node, a storage node allocates a first access permission for a target data page to the first compute node.

In this embodiment of this application, when the first compute node in a storage system wants to access a target data page stored in the storage node, the first compute node may send the permission request to the storage node, to request the first access permission for the target data page from the storage node. The first compute node is one of a plurality of compute nodes included in the storage system, and the target data page is one of a plurality of data pages persistently stored in the storage node.

The permission request may carry a page identifier of the target data page. In addition, the permission request may further indicate the requested first access permission.

For example, the permission request may carry an identifier of the first access permission. When the first access permission is a write operation permission, the permission request carries a permission identifier of the write operation permission. When the first access permission is a read operation permission, the permission request carries a permission identifier of the read operation permission.

Alternatively, the permission request may carry a request type, and the first access permission is indicated by using the request type. For example, when the request type of the permission request is a first type, the request type indicates that the first access permission is a write operation permission. When the request type of the permission request is a second type, the request type indicates that the first access permission is a read operation permission.

Optionally, in addition to the page identifier of the target data page, the permission request may further carry a node identifier of the first compute node, to indicate that the permission request is from the first compute node.

After receiving the permission request, the storage node may allocate the first access permission for the target data page to the first compute node.

For example, the storage node may detect whether a second compute node that has an access permission for the target data page currently exists. If the second compute node that has the access permission for the target data page currently does not exist, the storage node allocates the first access permission to the first compute node directly based on the permission request. If the second compute node that has the access permission for the target data page currently exists, the storage node allocates the first access permission to the first compute node based on a second access permission of the second compute node for the target data page and the permission request. The access permission for the target data page may include a read operation permission and a write operation permission. The read operation permission is a permission to read the target data page, and the write operation permission is a permission to modify the target data page.

In a possible implementation, the storage node may search for access permission information of the target data page based on the page identifier of the target data page carried in the permission request. The access permission information of the target data page indicates a compute node that currently has the access permission for the target data page. If the access permission information of the target data page is not found, it is determined that the second compute node that has the access permission for the target data page currently does not exist. If the access permission information of the target data page is found, it is determined that the second compute node that has the access permission for the target data page currently exists.

It should be noted that, for the data page persistently stored in the storage node, if the data page currently exists in a memory of a compute node, in other words, a compute node has an access permission for the data page, access permission information of the data page is recorded in a memory of the storage node, and the access permission information of the data page includes a page identifier of the data page. In view of this, in this embodiment of this application, the storage node may search the memory of the storage node for access permission information that includes the page identifier of the target data page. If the access permission information that includes the page identifier of the target data page is not found, it indicates that the access permission information of the target data page is not found, in other words, the second compute node that has the access permission for the target data page currently does not exist. If the access permission information that includes the page identifier of the target data page is found, it indicates that the access permission information of the target data page is found, in other words, the second compute node that has the access permission for the target data page currently exists.

When it is determined, in the foregoing manner, that the second compute node that has the access permission for the target data page currently does not exist, the storage node may generate the access permission information of the target data page directly based on the page identifier of the target data page carried in the permission request and the first access permission indicated by the permission request. In this case, the generated access permission information of the target data page indicates that the first compute node has the first access permission for the target data page.

For example, if the permission request carries a permission identifier of the first access permission and the node identifier of the first compute node, the storage node may store the page identifier of the target data page, the node identifier of the first compute node, and the permission identifier of the first access permission in a correspondence manner, to obtain the access permission information of the target data page.

Optionally, if the permission request carries the request type to indicate the first access permission, and the permission request further carries the node identifier of the first compute node, the storage node may obtain the permission identifier of the first access permission based on the request type of the permission request. Further, the page identifier of the target data page, the node identifier of the first compute node, and the permission identifier of the first access permission are stored in a correspondence manner, to obtain the access permission information of the target data page.

Optionally, if the permission request does not carry the node identifier of the first compute node, the storage node may determine the node identifier of the first compute node through a port receiving the permission request. Further, the page identifier of the target data page, the node identifier of the first compute node, and the permission identifier of the first access permission are stored in a correspondence manner, to obtain the access permission information of the target data page.

When it is determined, in the foregoing manner, that the second compute node that has the access permission for the target data page currently exists, the storage node may update the access permission information of the target data page based on the second access permission of the second compute node for the target data page and the permission request, to obtain updated access permission information. In this case, the updated access permission information indicates that the first compute node has the first access permission for the target data page.

For example, when the second compute node that has the access permission for the target data page currently exists, the access permission information of the target data page may include a correspondence between the page identifier of the target data page, a node identifier of the second compute node, and a permission identifier of the second access permission. In view of this, the storage node may obtain the node identifier of the first compute node and the permission identifier of the first access permission based on the permission request, and further update the access permission information of the target data page based on the node identifier of the first compute node, the permission identifier of the first access permission, and the correspondence, to obtain the updated access permission information.

For an implementation in which the storage node obtains the node identifier of the first compute node and the permission identifier of the first access permission based on the permission request, refer to the foregoing related implementations. Details are not described again in this embodiment of this application.

After the node identifier of the first compute node and the permission identifier of the first access permission are obtained, in a first case, if the first access permission is the write operation permission, and the permission identifier of the first access permission is the same as the permission identifier of the second access permission, it indicates that the second compute node currently has the write operation permission for the target data page. In this case, the storage node may update the node identifier of the second compute node in the correspondence to the node identifier of the first compute node, to obtain the updated access permission information. In other words, in this embodiment of this application, if the second compute node currently has the write operation permission for the target data page, and the first compute node also requests the write operation permission for the target data page, the storage node cancels the write operation permission of the second compute node for the target data page, and allocates the write operation permission for the target data page to the first compute node, to ensure that only one compute node has the write operation permission for the target data page at a same moment. Therefore, a write conflict is avoided.

In a second case, if the first access permission is the write operation permission, and the permission identifier of the first access permission is different from the permission identifier of the second access permission, it indicates that the second compute node currently has the read operation permission for the target data page. In this case, the storage node may update the node identifier of the second compute node in the correspondence to the node identifier of the first compute node, and update the permission identifier of the second access permission to the permission identifier of the first access permission, to obtain the updated access permission information. In other words, in this embodiment of this application, if the second compute node currently has the read operation permission for the target data page, and the first compute node requests the write operation permission for the target data page, the storage node cancels the read operation permission of the second compute node for the target data page, and allocates the write operation permission for the target data page to the first compute node. In this way, in a process in which the first compute node modifies the target data page, another compute node cannot read the target data page. Therefore, a read/write conflict is avoided.

It should be noted that, in this case, there may be a plurality of second compute nodes that currently have the read operation permission for the target data page. In other words, the plurality of second compute nodes may read the target data page in a sharing manner. In this case, there are also a plurality of correspondences. In this way, the storage node may modify one of the correspondences by using the foregoing method, and delete the remaining correspondences, to obtain the updated access permission information.

In a third case, if the first access permission is the read operation permission, and the permission identifier of the first access permission is the same as the permission identifier of the second access permission, the storage node adds a correspondence between the page identifier of the target data page, the node identifier of the first compute node, and the permission identifier of the first access permission to the access permission information of the target data page, to obtain the updated access permission information. In this case, the updated access permission information can indicate that the first compute node has the first access permission for the target data page, and indicate that the second compute node has the second access permission for the target data page. The first access permission is the same as the second access permission, and both the first access permission and the second access permission are read operation permissions. In other words, in this embodiment of this application, when the second access permission is the read operation permission, and the first access permission that the first compute node applies for is also the read operation permission, the storage node may allocate the read operation permission for the target data page to the first compute node without changing the read operation permission of the second compute node for the target data page, so that compute nodes read the target data page in a sharing manner.

In a fourth case, if the first access permission is the read operation permission, and the permission identifier of the first access permission is different from the permission identifier of the second access permission, the storage node updates the permission identifier of the second access permission in the correspondence to the permission identifier of the first access permission, and adds a correspondence between the page identifier of the target data page, the node identifier of the first compute node, and the permission identifier of the first access permission to the access permission information of the target data page, to obtain the updated access permission information. In other words, in this embodiment of this application, if the second compute node currently has the write operation permission for the target data page, and the first compute node requests the read operation permission for the target data page, the storage node allocates the read operation permission for the target data page to the first compute node, and changes the write operation permission of the second compute node for the target data page to the read operation permission. In this case, the first compute node and the second compute node read the target data page in a sharing manner.

In another possible implementation, the storage node may obtain access permission information of the target data page based on the page identifier of the target data page carried in the permission request, and further determine, based on the access permission information of the target data page, whether the second compute node that has the access permission for the target data page currently exists.

For example, for each data page persistently stored in the storage node, the storage node may store access permission information of the data page. The access permission information of the data page may include a page identifier of the data page and a permission identifier corresponding to a node identifier of each compute node in the storage system. The permission identifier indicates whether a corresponding compute node has an access permission for the data page. For example, the permission identifier may include a first permission identifier, a second permission identifier, and a third permission identifier. The first permission identifier and the second permission identifier indicate that the corresponding compute node has the access permission for the data page, and the third permission identifier indicates that the corresponding compute node does not have the access permission for the data page. The first permission identifier is a read operation permission identifier, and the second permission identifier is a write operation permission identifier. Alternatively, the first permission identifier is a write operation permission identifier, and the second permission identifier is a read operation permission identifier. The following uses an example in which the first permission identifier is a write operation permission identifier and the second permission identifier is a read operation permission identifier for description.

In view of this, the storage node may obtain, from access permission information of each data page stored in the storage node, access permission information that includes the page identifier of the target data page, to obtain the access permission information of the target data page. Then, the storage node searches the access permission information of the target data page for a compute node corresponding to the first permission identifier or the second permission identifier. If the compute node corresponding to the first permission identifier or the second permission identifier exists, it is determined that the second compute node that has the access permission for the target data page currently exists. The compute node that has the first permission identifier or the second permission identifier is the second compute node. If the compute node corresponding to the first permission identifier and the second permission identifier does not exist in the access permission information of the target data page, that is, permission identifiers corresponding to all compute nodes are third permission identifiers, it is determined that the second compute node that has the access permission for the target data page currently does not exist.

When it is determined, in the foregoing manner, that the second compute node that has the access permission for the target data page currently does not exist, the storage node may update the access permission information of the target data page directly based on the permission request, to obtain updated access permission information. In this case, the updated access permission information indicates that the first compute node has the first access permission for the target data page.

For example, with reference to the foregoing method, the storage node may obtain the node identifier of the first compute node and a permission identifier of the first access permission based on the permission request. Then, the storage node may search the access permission information of the target data page for the node identifier of the first compute node, and modify a third permission identifier corresponding to the node identifier of the first compute node to the permission identifier of the first access permission, to obtain the updated access permission information. When the first access permission is the write operation permission, the permission identifier of the first access permission is the first permission identifier. When the first access permission is a read operation permission, the permission identifier of the first access permission is the second permission identifier.

Alternatively, when it is determined, in the foregoing manner, that the second compute node that has the access permission for the target data page currently exists, the storage node may update the access permission information of the target data page based on the permission request and a permission identifier corresponding to the second compute node, to obtain updated access permission information. In this case, the updated access permission information can indicate that the first compute node has the first access permission for the target data page.

For example, with reference to the foregoing method, the storage node may obtain the node identifier of the first compute node and a permission identifier of the first access permission based on the permission request. Then, the permission identifier corresponding to the second compute node is obtained from the access permission information of the target data page. The permission identifier corresponding to the second compute node is a permission identifier of a second access permission of the second compute node for the target data page. Then, the storage node updates the access permission information of the target data page based on the node identifier of the first compute node, a permission identifier of the first access permission, and the permission identifier of the second access permission, to obtain the updated access permission information.

In a first case, if the first access permission is the write operation permission, and the permission identifier of the first access permission is the same as the permission identifier of the second access permission, it indicates that the second compute node currently has the write operation permission for the target data page. In this case, the storage node may modify the permission identifier of the second access permission corresponding to the second compute node in the access permission information of the target data page to the third permission identifier, and modify a permission identifier corresponding to the first compute node to the permission identifier of the first access permission, in other words, modify the permission identifier corresponding to the first compute node to the first permission identifier. In other words, in this embodiment of this application, if the second compute node currently has the write operation permission for the target data page, and the first compute node also requests the write operation permission for the target data page, the storage node modifies the permission of the second compute node for the target data page to no access permission, and then allocates the write operation permission for the target data page to the first compute node, to ensure that only one compute node has the write operation permission for the target data page at a same moment. Therefore, a write conflict is avoided.

In a second case, if the first access permission is the write operation permission, and the permission identifier of the first access permission is different from the permission identifier of the second access permission, it indicates that the second compute node currently has the read operation permission for the target data page. In this case, the storage node may modify the permission identifier corresponding to the second compute node in the access permission information of the target data page to the third permission identifier, and modify a permission identifier corresponding to the first compute node to the permission identifier of the first access permission, in other words, modify the permission identifier corresponding to the first compute node to the first permission identifier, to obtain the updated access permission information. In other words, in this embodiment of this application, if the second compute node currently has the read operation permission for the target data page, and the first compute node requests the write operation permission for the target data page, the storage node modifies the permission of the second compute node for the target data page to no access permission, and allocates the write operation permission for the target data page to the first compute node. In this way, in a process in which the first compute node modifies the target data page, another compute node cannot read the target data page. Therefore, a read/write conflict is avoided.

It should be noted that, in this case, there may be a plurality of second compute nodes that currently have the read operation permission for the target data page. In other words, the plurality of second compute nodes may read the target data page in a sharing manner. In this case, the storage node may modify a permission identifier corresponding to each second compute node to the third permission identifier, to cancel a read operation permission of each second compute node for the target data page.

In a third case, if the first access permission is the read operation permission, and the permission identifier of the first access permission is the same as the permission identifier of the second access permission, the storage node may not modify the permission identifier corresponding to the second compute node in the access permission information of the target data page, but modify a permission identifier corresponding to the first compute node to the identifier of the first access permission, in other words, modify the permission identifier corresponding to the first compute node to the second permission identifier, to obtain the updated access permission information. In this case, the updated access permission information can indicate that the first compute node has the first access permission for the target data page, and indicate that the second compute node has the second access permission for the target data page. The first access permission is the same as the second access permission, and both the first access permission and the second access permission are read operation permissions. In other words, in this embodiment of this application, when the second access permission is the read operation permission, and the first access permission that the first compute node applies for is also the read operation permission, the storage node may allocate the read operation permission for the target data page to the first compute node without changing the read operation permission of the second compute node for the target data page, so that compute nodes read the target data page in a sharing manner.

In a fourth case, if the first access permission is the read operation permission, and the permission identifier of the first access permission is different from the permission identifier of the second access permission, the storage node may modify the permission identifier corresponding to the second compute node in the access permission information of the target data page to the second permission identifier, and modify a permission identifier corresponding to the first compute node to the identifier of the first access permission, in other words, modify the permission identifier corresponding to the first compute node to the second permission identifier, to obtain the updated access permission information. In other words, in this embodiment of this application, when the second access permission is a write operation permission, and the first access permission that the first compute node applies for is the read operation permission, the storage node may allocate the read operation permission for the target data page to the first compute node, and modify the write operation permission of the second compute node for the target data page to the read operation permission. In this case, the first compute node and the second compute node read the target data page in a sharing manner.

In a process in which the storage node allocates the first access permission for the target data page to the first compute node, the storage node may further obtain the target data page.

If the second compute node that has the access permission for the target data page does not currently exist, the storage node may directly read the target data page from the plurality of data pages persistently stored in the storage node. For example, when persistently storing data by using a hard disk, the storage node may read the target data page from a plurality of data pages stored in the hard disk.

If the second compute node that has the access permission for the target data page currently exists, and the second access permission of the second compute node is the write operation permission, the storage node may read, from the second compute node, a target data page obtained through modification by the second compute node.

If the second compute node that has the access permission for the target data page currently exists, and the second access permission of the second compute node is the read operation permission, the storage node may read the target data page from the second compute node. Alternatively, if a target data page stored in the second compute node has been persistently stored in the storage node, the storage node may directly read the target data page from the plurality of persistently stored data pages. This is not limited in this embodiment of this application.

In addition, in a process of allocating the first access permission to the first compute node, if changing the second access permission of the second compute node for the target data page in the foregoing manner, the storage node may further read the target data page from the second compute node, and indicate the second compute node to change the second access permission for the target data page.

For example, if the second access permission is the write operation permission, and the first access permission is also the write operation permission, the storage node sends a permission cancellation notification to the second compute node after canceling the write operation permission of the second compute node for the target data page. After receiving the permission cancellation notification, the second compute node changes the write operation permission for the target data page recorded by the second compute node to no operation permission, to delete the write operation permission for the target data page, and stop a modification operation on the target data page. Then, the second compute node may further record, in a memory of the second compute node, a status of the target data page as a past dirty state, and return the target data page obtained through modification by the second compute node to the storage node.

For another example, if the second access permission is the write operation permission, and the first access permission is the read operation permission, the storage node sends a permission change notification to the second compute node after changing the write operation permission of the second compute node for the target data page to the read operation permission. The permission change notification carries a permission identifier of the read operation permission to which the write operation permission of the second compute node for the target data page is to be changed. After receiving the permission change notification, the second compute node changes the write operation permission for the target data page recorded by the second compute node to the read operation permission, to stop a modification operation on the target data page. Then, the second compute node returns the target data page obtained through modification by the second compute node to the storage node.

For another example, if the second access permission is the read operation permission, and the first access permission is the write operation permission, the storage node sends a permission cancellation notification to the second compute node after canceling the read operation permission of the second compute node for the target data page. After receiving the permission cancellation notification, the second compute node changes the write operation permission for the target data page recorded by the second compute node to no operation permission, to delete the read operation permission for the target data page. Then, the second compute node returns the target data page to the storage node.

Step 502: The storage node sends permission feedback information and the target data page to the first compute node, where the permission feedback information indicates to allow the first compute node to access the target data page based on the first access permission.

After allocating the first access permission for the target data page to the first compute node and obtaining the target data page, the storage node may send the permission feedback information and the target data page together to the first compute node.

The permission feedback information may be a permission application success notification, to indicate the first compute node that application for the first access permission for the target data page is successful. For example, the permission application success notification may further carry the permission identifier of the first access permission.

After receiving the permission feedback information, the first compute node may record information about the first access permission of the first compute node for the target data page, and then process the target data page based on the first access permission.

For example, the first compute node may store the page identifier of the target data page and the permission identifier of the first access permission in a correspondence manner, to record that the first compute node currently has the first access permission for the target data page.

If the first access permission is the write operation permission, the first compute node may modify the target data page, and store a modified target data page in a memory of the first compute node. Therefore, when the another compute node subsequently applies for the access permission for the target data page, the modified target data page is returned to the storage node, or the first compute node may subsequently persistently store the modified data page in the storage node. In addition, after modifying the target data page, the first compute node may further record the status of the target data page as a dirty state. For example, the first compute node may store the page identifier and the status of the target data page in a correspondence manner.

If the first access permission is the read operation permission, after the first compute node obtains the target data page, it may be considered that the first compute node has read the target data page. Then, the first compute node may perform subsequent service processing based on the target data page. This is not limited in this embodiment of this application.

In this embodiment of this application, the storage node in the storage system stores the data page, and may receive the permission request of the compute node for the stored data page, and allocate the access permission to the compute node. In other words, in this embodiment of this application, a permission management function of the data page is offloaded from the compute node to the storage node that stores the data page. In this way, even if a compute node is faulty, a primary compute node does not need to be reselected. The another compute node may still apply for the access permission via the storage node in the storage system. This improves system availability.

In addition, in this embodiment of this application, after the compute node sends the permission request to the storage node, the storage node may obtain the data page in the process of allocating the access permission for the data page to the compute node, and subsequently return the data page and the permission feedback information together to the compute node. It can be learned that, in this embodiment of this application, the compute node obtains the access permission and the data page at one time through one time of interaction between the compute node and the storage node. This reduces a quantity of times of requesting interaction, reduces network bandwidth consumption, and improves access efficiency.

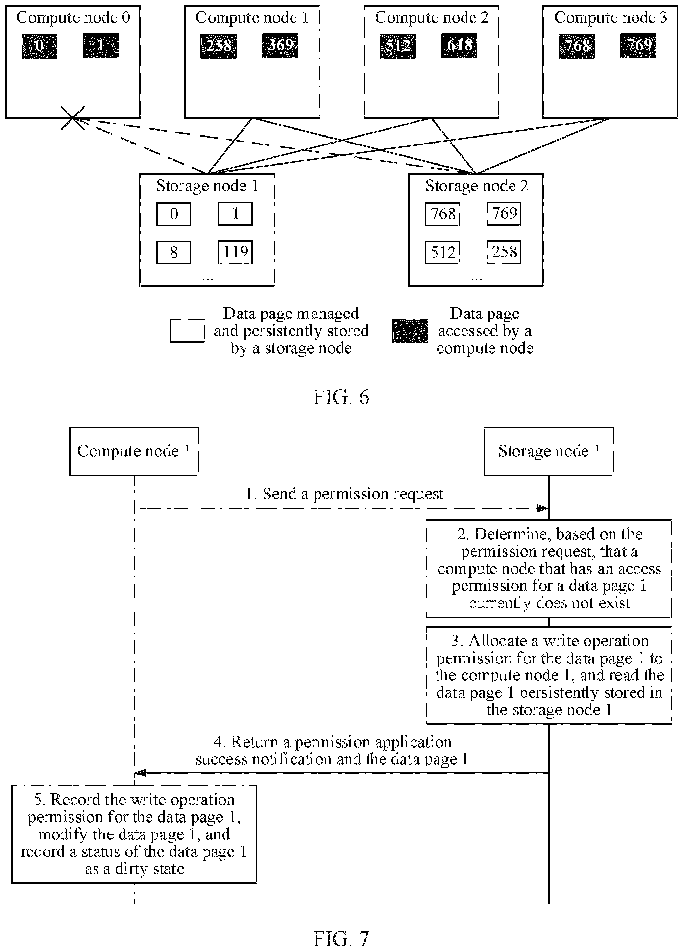

FIG. 6 is an effect diagram after a data page management function is offloaded to a storage node according to an embodiment of this application. As shown in FIG. 6, a storage node 1 manages an access permission for a data page persistently stored in the storage node 1 and a storage node 2 manages an access permission for a data page persistently stored in the storage node 2. In this way, when accessing the data pages in the storage nodes 1 and 2, any one of compute nodes 0 to 3 may request the access permissions from corresponding storage nodes and obtain the data pages by using the foregoing data access method. In this case, after a compute node is faulty, for example, when the compute node 0 is faulty, another compute node may still request the access permissions from the storage nodes. Especially for a data page that does not exist in a memory of the compute node 0, access to the data page by the another compute node is not affected. Therefore, system availability is improved. For a data page existing in the memory of the compute node 0, a normally running compute node may be randomly selected or may be selected by using a simpler method to take over the data page. There is no need to use a consistent hashing algorithm to recalculate a primary compute node that replaces the compute node 0 and migrate access permission information of a large quantity of data pages. This shortens fault recovery time.

The following uses two examples to describe the foregoing data access method.

Refer to FIG. 7. It is assumed that a data page 1 stored in a storage node 1 currently does not exist in a memory of any compute node. In other words, a compute node that has an access permission for the data page 1 currently does not exist. In this case, when a compute node 1 wants to apply for a write operation permission for the data page 1, an implementation process is as follows.
1. The compute node 1 sends a permission request to the storage node 1.
   The permission request may carry a permission identifier of the write operation permission, a node identifier of the compute node 1, and a page identifier of the data page 1.
2. The storage node 1 determines, based on the permission request, that the compute node that has the access permission for the data page 1 currently does not exist.
   For an implementation process of this step, refer to the foregoing implementation in which the storage node determines whether the compute node that has the access permission for the target data page exists.
3. The storage node 1 allocates the write operation permission for the data page 1 to the compute node 1, and reads the data page 1 persistently stored in the storage node 1.
   In other words, the storage node 1 may record the compute node 1 as a node that currently has the write operation permission for the data page 1. In this case, the compute node 1 is an owner (owner) of the data page 1.
4. The storage node 1 returns a permission application success notification and the data page 1 to the compute node 1.
5. The compute node 1 records the write operation permission for the data page 1, modifies the data page 1, and records a status of the data page 1 as a dirty state.

It can be learned from comparison between an implementation procedure shown in FIG. 7 and an implementation procedure shown in FIG. 2 that, in a scenario in which the data page is initially loaded to the memory of a compute node, according to the data access method provided in embodiments of this application, the compute node can obtain the access permission and the data page from the storage node by using one request without other interaction. However, in the procedure shown in FIG. 2, the compute node first obtains the access permission through interaction between the compute node and the primary compute node, and then obtains the data page through interaction between the compute node and the storage node. It can be learned that, according to the data access method provided in this application, a quantity of times of interaction can be reduced, and access efficiency can be improved.

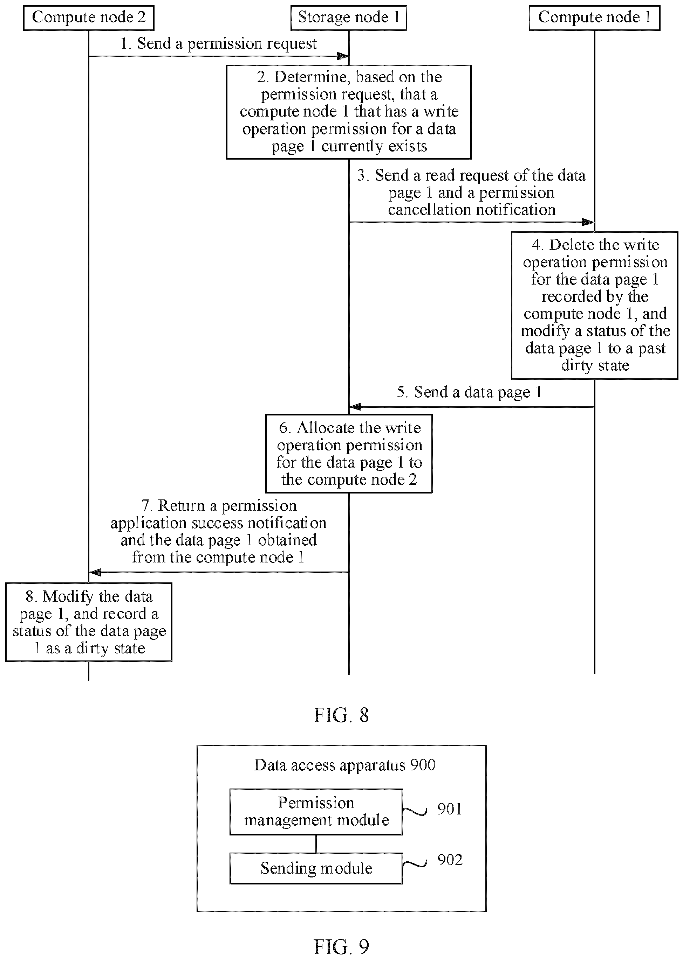

After the compute node 1 modifies the data page, it is assumed that a compute node 2 also wants to modify the data page 1. According to the data access method provided in embodiments of this application, an implementation process may be shown in FIG. 8.
1. A compute node 2 sends a permission request to a storage node 1.
   The permission request may carry a permission identifier of a write operation permission, a node identifier of the compute node 2, and a page identifier of a data page 1.
2. The storage node 1 determines, based on the permission request, that a compute node 1 that has the write operation permission for the data page 1 currently exists.
   In other words, the compute node 1 is a current owner of the data page 1.
3. The storage node 1 sends a read request of the data page 1 and a permission cancellation notification to the compute node 1.
   The permission cancellation notification indicates the compute node 1 to cancel the write operation permission for the data page 1.
4. The compute node 1 deletes the write operation permission for the data page 1 recorded by the compute node 1, and modifies a status of the data page 1 to a past dirty state.
   The compute node 1 may modify the write operation permission corresponding to the data page 1 to no operation permission, to delete the write operation permission.
5. The compute node 1 sends a data page 1 to the storage node 1.
   The data page 1 is a latest data page 1 obtained through modification by the compute node 1.
6. The storage node 1 allocates the write operation permission for the data page 1 to the compute node 2.
   In other words, the storage node 1 records that the compute node 2 currently has the write operation permission for the data page 1. In this way, the compute node 2 becomes the current owner of the data page 1.
7. The storage node 1 returns, to the compute node 2, a permission application success notification and the data page 1 obtained from the compute node 1.
8. The compute node 2 modifies the data page 1, and records the status of the data page 1 as a dirty state.

It can be learned from comparison between an implementation procedure shown in FIG. 8 and an implementation procedure shown in FIG. 3 that, in a scenario in which the compute node 2 applies for modifying the data page 1 again after the data page 1 is modified by the compute node 1, according to the data access method provided in embodiments of this application, when allocating the access permission to the compute node 2, the storage node may obtain the modified data page from the compute node 1, and then return the data page 1 and the allocated permission to the compute node 2 at one time. In other words, the storage node needs to interact with the compute node 1 once and interact with the compute node 2 once in the entire process. However, in the procedure shown in FIG. 3, the compute node 2 first obtains the node information of the compute node 1 through one time of interaction between the compute node 2 and the primary compute node, and then obtains the data page through one time of interaction between the compute node 2 and the compute node 1. Then, the compute node 2 interacts with the primary compute node once again to register the access permission. It can be learned that, according to the data access method provided in this application, a quantity of times of interaction between nodes can be reduced, and access efficiency can be improved.

Refer to FIG. 9. An embodiment of this application provides a data access apparatus 900. The apparatus 900 includes a permission management module 901 and a sending module 902.

The permission management module 901 is configured to perform step 501 in the foregoing embodiment.

The sending module 902 is configured to perform step 502 in the foregoing embodiment.

It should be noted that the data access apparatus may be deployed on the storage node in the foregoing storage system, for example, deployed on a controller of the storage node. The controller implements the permission management module 901 and the sending module 902.

Optionally, the permission management module 901 is mainly configured to:
when a second compute node that has an access permission for a target data page currently does not exist, allocate a first access permission to a first compute node based on a permission request.

Optionally, the permission request includes a page identifier of the target data page. The permission management module 901 is further configured to:
search for access permission information of the target data page based on the page identifier of the target data page, where the access permission information of the target data page indicates a compute node that currently has the access permission for the target data page; and
when the access permission information of the target data page is not found, determine that the second compute node currently does not exist.

Optionally, the permission request further includes a node identifier of the first compute node and a permission identifier of the first access permission.

The permission management module 901 is mainly configured to:
store the page identifier of the target data page, the node identifier of the first compute node, and the permission identifier of the first access permission in a correspondence manner, to obtain the access permission information of the target data page.

Optionally, the apparatus 900 further includes:
a reading module, configured to read the target data page from a plurality of data pages persistently stored in the storage node.

Alternatively, the permission management module 901 is mainly configured to:
when a second compute node that has an access permission for a target data page currently exists, allocate a first access permission to a first compute node based on a second access permission of the second compute node for the target data page and a permission request.

Optionally, the permission request includes a page identifier of the target data page. The permission management module 901 is further configured to:
search for access permission information of the target data page based on the page identifier of the target data page, where the access permission information of the target data page indicates a compute node that currently has the access permission for the target data page; and
when the access permission information of the target data page is found, determine that the second compute node currently exists.

Optionally, the permission management module 901 is mainly configured to:
update the access permission information of the target data page based on the second access permission of the second compute node for the target data page and the permission request, to obtain updated access permission information, where the updated access permission information indicates that the first compute node has the first access permission for the target data page.

Optionally, the permission request further includes a node identifier of the first compute node and a permission identifier of the first access permission, and the access permission information of the target data page includes a correspondence between the page identifier of the target data page, a node identifier of the second compute node, and a permission identifier of the second access permission.

The permission management module 901 is mainly configured to:
when the first access permission is a write operation permission, and the permission identifier of the first access permission is the same as the permission identifier of the second access permission, update the node identifier of the second compute node to the node identifier of the first compute node, to obtain the updated access permission information.

Alternatively, the permission request further includes a node identifier of the first compute node and a permission identifier of the first access permission, and the access permission information of the target data page includes a correspondence between the page identifier of the target data page, a node identifier of the second compute node, and a permission identifier of the second access permission.

The permission management module 901 is mainly configured to:
when the first access permission is a write operation permission, and the permission identifier of the first access permission is different from the permission identifier of the second access permission, update the node identifier of the second compute node to the node identifier of the first compute node, and update the permission identifier of the second access permission to the permission identifier of the first access permission, to obtain the updated access permission information.

Alternatively, the permission request further includes a node identifier of the first compute node and a permission identifier of the first access permission, and the access permission information of the target data page includes a correspondence between the page identifier of the target data page, a node identifier of the second compute node, and a permission identifier of the second access permission.

The permission management module 901 is mainly configured to:
when the first access permission is a read operation permission, and the permission identifier of the first access permission is the same as the permission identifier of the second access permission, add a correspondence between the page identifier of the target data page, the node identifier of the first compute node, and the permission identifier of the first access permission to the access permission information of the target data page, to obtain the updated access permission information.

Optionally, the apparatus 900 further includes:
a reading module, configured to read the target data page from the second compute node.

Optionally, the storage node communicates with each compute node by using a network.

In conclusion, in this embodiment of this application, the storage node in the storage system stores the data page, and may receive the permission request of the compute node for the stored data page, and allocate the access permission to the compute node. In other words, in this embodiment of this application, a permission management function of the data page is offloaded from the compute node to the storage node that stores the data page. In this way, even if a compute node is faulty, a primary compute node does not need to be reselected. Another compute node may still apply for the access permission via the storage node in the storage system. This improves system availability.

It should be noted that, when the data access apparatus provided in the foregoing embodiment performs data access, division into the foregoing functional modules is merely used as an example for description. During actual application, the foregoing functions may be allocated to different functional modules for implementation based on a requirement. That is, an internal structure of a device is divided into different functional modules, to implement all or a part of the functions described above. In addition, the data access apparatus provided in the foregoing embodiment and the data access method embodiment belong to a same concept. For a specific implementation process thereof, refer to the method embodiment. Details are not described herein again.

All or a part of the foregoing embodiments may be implemented by software, hardware, firmware, or any combination thereof. When software is used for implementation, all or a part of the foregoing embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, microwave, or the like) manner. The computer-readable storage medium may be any usable medium that can be accessed by the computer, or a data storage device, such as a server, a data center, or the like, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

A person skilled in the art may understand that all or a part of the steps of the foregoing embodiments may be implemented by hardware or a program instructing related hardware. The program may be stored in a computer-readable storage medium. The storage medium may be a read-only memory, a magnetic disk, a compact disc, or the like.

The foregoing descriptions are not intended to limit embodiments of this application. Any modification, equivalent replacement, improvement, or the like made within the spirit and principle of embodiments of this application should fall within the protection scope of embodiments of this application.

## Claims

1. A data access method, wherein the method comprises:
in response to a permission request sent by a first compute node, allocating, by a storage node, a first access permission for a target data page to the first compute node, wherein the target data page is one of a plurality of data pages stored in the storage node, and the first compute node is one of a plurality of compute nodes comprised in a storage system; and
sending, by the storage node, a permission feedback information and the target data page to the first compute node, wherein the permission feedback information indicates to allow the first compute node to access the target data page based on the first access permission.

2. The method according to claim 1, wherein the storage node communicates with the plurality of compute nodes by using a network.

3. The method according to claim 1 or 2, wherein the allocating a first access permission for a target data page to the first compute node comprises:
when a second compute node that has an access permission for the target data page currently does not exist, allocating, by the storage node, the first access permission to the first compute node based on the permission request.

4. The method according to claim 3, wherein the permission request comprises a page identifier of the target data page, and the method further comprises:
searching for, by the storage node, access permission information of the target data page based on the page identifier of the target data page, wherein the access permission information of the target data page indicates a compute node that currently has the access permission for the target data page; and
when the access permission information of the target data page is not found, determining, by the storage node, that the second compute node currently does not exist.

5. The method according to claim 4, wherein the permission request further comprises a node identifier of the first compute node and a permission identifier of the first access permission; and
the allocating, by the storage node, the first access permission to the first compute node based on the permission request comprises:
storing, by the storage node, the page identifier of the target data page, the node identifier of the first compute node, and the permission identifier of the first access permission in a correspondence manner, to obtain the access permission information of the target data page.

6. The method according to any one of claims 3 to 5, wherein after the allocating, by the storage node, the first access permission to the first compute node based on the permission request, the method further comprises:
reading the target data page from the plurality of data pages persistently stored in the storage node.

7. The method according to claim 1 or 2, wherein the allocating a first access permission for a target data page to the first compute node comprises:
when a second compute node that has an access permission for the target data page currently exists, allocating, by the storage node, the first access permission to the first compute node based on a second access permission of the second compute node for the target data page and the permission request.

8. The method according to claim 7, wherein the permission request comprises a page identifier of the target data page, and the method further comprises:
searching for, by the storage node, access permission information of the target data page based on the page identifier of the target data page, wherein the access permission information of the target data page indicates a compute node that currently has the access permission for the target data page; and
when the access permission information of the target data page is found, determining, by the storage node, that the second compute node currently exists.

9. The method according to claim 8, wherein the allocating, by the storage node, the first access permission to the first compute node based on a second access permission of the second compute node for the target data page and the permission request comprises:
updating, by the storage node, the access permission information of the target data page based on the second access permission of the second compute node for the target data page and the permission request, to obtain updated access permission information, wherein the updated access permission information indicates that the first compute node has the first access permission for the target data page.

10. The method according to any one of claims 7 to 9, wherein the method further comprises:
reading, by the storage node, the target data page from the second compute node.

11. A data access apparatus, used in a storage node in a storage system, wherein the apparatus comprises:
a permission management module, configured to: in response to a permission request sent by a first compute node, allocate a first access permission for a target data page to the first compute node, wherein the target data page is one of a plurality of data pages stored in the storage node, and the first compute node is one of a plurality of compute nodes comprised in the storage system; and
a sending module, configured to send permission feedback information and the target data page to the first compute node, wherein the permission feedback information indicates to allow the first compute node to access the target data page based on the first access permission.

12. The apparatus according to claim 11, wherein the storage node communicates with the plurality of compute nodes by using a network.

13. The apparatus according to claim 11 or 12, wherein the permission management module is mainly configured to:
when a second compute node that has an access permission for the target data page currently does not exist, allocate the first access permission to the first compute node based on the permission request.

14. The apparatus according to claim 13, wherein the permission request comprises a page identifier of the target data page, and the permission management module is further configured to:
search for access permission information of the target data page based on the page identifier of the target data page, wherein the access permission information of the target data page indicates a compute node that currently has the access permission for the target data page; and
when the access permission information of the target data page is not found, determine that the second compute node currently does not exist.

15. The apparatus according to claim 14, wherein the permission request further comprises a node identifier of the first compute node and a permission identifier of the first access permission; and
the permission management module is mainly configured to:
store the page identifier of the target data page, the node identifier of the first compute node, and the permission identifier of the first access permission in a correspondence manner, to obtain the access permission information of the target data page.

16. The apparatus according to any one of claims 13 to 15, wherein the apparatus further comprises:
a reading module, configured to read the target data page from the plurality of data pages persistently stored in the storage node.

17. The apparatus according to claim 11 or 12, wherein the permission management module is mainly configured to:
when a second compute node that has an access permission for the target data page currently exists, allocate the first access permission to the first compute node based on a second access permission of the second compute node for the target data page and the permission request.

18. The apparatus according to claim 17, wherein the permission request comprises a page identifier of the target data page, and the permission management module is further configured to:
search for access permission information of the target data page based on the page identifier of the target data page, wherein the access permission information of the target data page indicates a compute node that currently has the access permission for the target data page; and
when the access permission information of the target data page is found, determine that the second compute node currently exists.

19. The apparatus according to claim 18, wherein the permission management module is mainly configured to:
update the access permission information of the target data page based on the second access permission of the second compute node for the target data page and the permission request, to obtain updated access permission information, wherein the updated access permission information indicates that the first compute node has the first access permission for the target data page.

20. The apparatus according to any one of claims 17 to 19, wherein the apparatus further comprises:
a reading module, configured to read the target data page from the second compute node.

21. A storage system, wherein the storage system comprises a plurality of compute nodes and a plurality of storage nodes; and when any compute node in the plurality of compute nodes is configured to send a permission request to any storage node, and the permission request is used to request a first access permission for a target data page, the any storage node is configured to perform the data access method according to any one of claims 1 to 10, and the any compute node is further configured to receive permission feedback information and the target data page sent by the any storage node, wherein the permission feedback information indicates to allow the any compute node to access the target data page based on the first access permission.

22. A computer-readable storage medium, wherein the computer-readable storage medium stores instructions; and when the instructions are run on a computer, the computer is enabled to perform the data access method according to any one of claims 1 to 10.
